# EUROPÄISCHE PATENTSCHRIFT

(11) **EP 1 028 669 B1**
(45) Veröffentlichungstag und Bekanntmachung des Hinweises auf die Patenterteilung: **03.12.2003**
(21) Anmeldenummer: 98959846.1
(22) Anmeldetag: 05.11.1998
(51) Int. Cl.: A61C 9/00

(54) **VERBINDUNGSSTIFT UND STECKVERBINDUNG ZUR BEFESTIGUNG VON ZAHNKRANZ- ODER KIEFERSEGMENTEN**
CONNECTING PIN AND SOCKET CONNECTION FOR FASTENING DENTAL CROWN OR JAW SEGMENTS
TIGE D'ASSEMBLAGE ET DISPOSITIF D'ASSEMBLAGE PAR ENFICHAGE POUR LA FIXATION DE SEGMENTS DE COURONNES DENTAIRES OU DE MAXILAIRES

(30) Priorität: 09.11.1997 DE 29719844 U; 23.11.1997 DE 19751793; 10.03.1998 DE 19810083
(43) Veröffentlichungstag der Anmeldung: 23.08.2000
(73) Patentinhaber: Laux, Robert, 73462 Welzheim-Eselshalden (DE)
(72) Erfinder: Laux, Robert, 73462 Welzheim-Eselshalden (DE)
(74) Vertreter: Müller, Gottfried
(86) Internationale Anmeldenummer: EP9807049
(87) Internationale Veröffentlichungsnummer: WO99023972

(56) Entgegenhaltungen:
- DE-A- 3 108 700
- DE-A- 3 301 617
- DE-A- 19 600 854

## Beschreibung

Die Erfindung betrifft einen Verbindungsstift zur Befestigung von Zahnkranz- oder Kiefersegmenten nach dem Oberbegriff des Anspruches 1.

Aus der Druckschrift DE 38 07 591 C2 ist eine Steckverbindung zur Verbindung von Arbeitsmodellen einzelner Zahn kranz- oder Kiefersegmenten mit einer Modellbasis bekannt. Die Steckverbindung umfaßt einen Verbindungsstift und eine Führungshülse, welche fest mit der Modellbasis verbunden ist. Der die Arbeitsmodelle der Segmente tragende Verbindungsstift wird lösbar in die Führungshülse in der Modellbasis eingesetzt, wodurch ein fester Halt der Arbeitsmodelle auf der Modellbasis für eine präzise Bearbeitung erreicht wird; zugleich können die einzelnen Segmente jederzeit aus der Modellbasis wieder herausgenommen werden.

Der Verbindungsstift besteht aus zwei Schäften, einem Fixierschaft zur permanenten Fixierung in der Unterseite eines einzelnen Zahn- oder Kiefersegments und einem Steckschaft zur lösbaren Halterung in der in die Modellbasis eingesetzten Führungshülse. Der Fixierschaft wird in ein vorgebohrtes zylindrisches Loch des aus ausgehärtetem Gips bestehenden Arbeitsmodell des Zahn- oder Kiefersegments eingesetzt und mittels Klebstoff unlösbar mit dem Modell verbunden. Die Mantelfläche des Fixierschaftes weist umlaufende Nuten auf, die für eine zusätzliche Stärkung des Verbundes von Verbindungsstift und Modell sorgen.

Hierbei besteht das Problem, daß einerseits der Fixierschaft und das Bohrloch im Modell mit möglichst geringer Toleranz und wenig Spiel gefertigt sein sollen, damit größtmögliche Präzision beim Bearbeiten des Modells gewährleistet werden kann. Andererseits besteht aufgrund der spielfreien Fertigung die Gefahr, daß der Fixierschaft sich beim Einführen in das Bohrloch im Modell verkantet, so daß die Achsen von Fixierschaft und Bohrloch nicht mehr parallel verlaufen und aufgrund der schräg eingesetzten Position des Fixierschafts das Modell nicht in der vorgesehenen Weise in Bezug zur Modellbasis gehalten wird. Außerdem kann der schräg eingesetzte Fixierschaft nicht vollständig in das Bohrloch versenkt werden, so daß benachbarte Zahnkranzoder Kiefersegmente geringfügig höhenversetzt in der Modellbasis plaziert werden, was sich negativ auf die Bearbeitungsgenauigkeit des Modells auswirkt.

Ein weiteres Problem entsteht durch die Art der Verbindung von Steckschaft des Verbindungsstiftes und Führungshülse in der Modellbasis. Der Steckschaft umfaßt zwei Abschnitte, von denen zumindest einer zylindrisch ausgebildet ist und in die komplementär geformte Führungshülse lösbar eingesetzt wird. Zwischen zylindrischer Mantelfläche des Steckschaftes und dem zylindrischen Innenmantel der Führungshülse bestehen infolge der großen Friktionsflächen hohe Haftreibungskräfte, die beim Entfernen eines Segments überwunden werden müssen. Soll der Verbindungsstift nach Abschluß der Modellbearbeitung aus der Führungshülse entfernt werden, kann es beim Lösen des Steckschaftes aus der Hülse zu Beschädigungen des Arbeitsmodells kommen, beispielsweise zu einem unerwünschten Herauslösen des Verbindungsstifts aus der permanenten Fixierung im Bohrloch des Modells. Auch die Modellbasis kann durch die hohen, für das Entfernen des Arbeitsmodells erforderlichen Lösekräfte beschädigt werden.

Vergleichbare Steckverbindungen gehen auch aus den Druckschriften DE 33 01 617 A1 und DE 31 08 700 A1 hervor.

Darüberhinaus ist es aus der Druckschrift DE 196 00 854 A1 bekannt, in den Fixierschaft des Verbindungsstifts einen Längsschlitz einzubringen, um ein elastisches Zusammendrücken der Schaftteile für ein leichteres Einführen des Fixierschafts in das Arbeitsmodell zu ermöglichen. Nach dem Einstecken streben die Schaftteile radial nach außen und erzeugen eine den Verbindungsstift fixierende Klemmkraft, über die der Verbindungsstift sicher in dem Arbeitsmodell gehalten ist.

Der Erfindung liegt das Problem zugrunde, eine kostengünstige, einfach herzustellende Verbindung zwischen einer Modellbasis und einem Arbeitsmodell eines Zahnkranz- oder Kiefersegments zu schaffen, die ein präzises Bearbeiten eines zahntechnischen Arbeitsmodells erlaubt und die leicht wieder gelöst werden kann.

Dieses Problem wird erfindungsgemäß mit den Merkmalen des Anspruches 1 gelöst.

Die Form der Mantelfläche des mit dem Arbeitsmodell zu verbindenden Fixierschafts verläuft erfindungsgemäß konisch. Indem die Mantelfläche des von äußeren Kräften unbelasteten Fixierschafts von der Zylinderform abweicht und die Mantelfläche im Bereich des kleinsten Radius gegenüber der Zylinderform radial zurückversetzt ist, wird in Radialrichtung eine Hinterschneidung gebildet. Für den Fall, daß keine äußeren Kräfte am Fixierschaft angreifen, streben die Schaftteile im unbelasteten Zustand von ihrem Befestigungsfuß aus gesehen geringfügig radia1 nach außen; die Hinterschneidung ist hierbei definiert als Differenz zwischen maximalem und minimalem Radius der Fixierschaft-Mantelfläche im unbelasteten Zustand. Zwischen den Schaftteilen erstreckt sich der Schlitz mit einer definierten Schlitzdicke, wobei die Schaftteile zumindest in einem Maße biegsam ausgebildet sind, daß die Schaftteile im Bereich der freien Stirnseite des Fixierschaftes zum Einsetzen in das Bohrloch im Arbeitsmodell zusammengedruckt werden können.

Durch das Zusammendrücken der Schaftteile verändert sich die Mantelfläche des Fixierschafts, die nunmehr näherungsweise zylindrisch ist. Aufgrund der Elastizität und der Eigenspannung drücken die zusammengepreßten Schaftteile radial nach außen. Da die Mantelfläche etwa zylindrisch ist, ergibt sich bei einem in das Bohrloch des Arbeitsmodells eingesetzten Verbindungsstift eine über die axiale Länge des Fixierschaftes näherungsweise gleichmäßige Flächenpressung auf die Innenwandung des Bohrloches. Hierdurch entstehen hohe, den Fixierschaft im Bohrloch festklemmende Haltekräfte, die aber gleichmäßig über den Innenmantel des Bohrloches verteilt sind, so daß das Bohrloch belastende Kraftspitzen vermieden werden. Zudem wird das Einführen in das Bohrloch erleichtert, weil der Durchmesser des Fixierschaftes bei zusammengedrückten Schaftteilen etwa gleich ist wie oder geringfügig kleiner ist als der Durchmesser des Bohrloches, so daß beim Einführen nur minimale Reibung zu überwinden ist. Der Durchmesser der zylindrischen Mantelfläche entspricht hierbei dem Durchmesser des unbelasteten Fixierschaftes im Bereich des kleinsten Radius.

Die Hinterschneidung des unbelasteten Fixierschaftes stellt im Zusammenhang mit dem zwischen den Schaftteilen gebildeten Schlitz sicher, daß ein Zusammendrücken der Schaftteile bis zum Erreichen einer zylindrischen Mantelfläche des Fixierschaftes möglich ist.

Das Erreichen der Zylinderform wird zweckmäßig dadurch unterstützt, daß der Abstand zwischen den Schaftteilen im Bereich der freien Stirnseite des Fixierschaftes - die Schlitzdicke in diesem Bereich - mindestens so groß ist wie die Summe der beiden radial gegenüberliegenden Hinterschneidungen im Bereich des Befestigungsfußes der Schaftteile bzw. im Bereich einer Auflageschulter, welche vorteilhaft im Übergang zwischen Fixierschaft und Steckschaft gebildet ist. Die in Radialrichtung gemessenen Hinterschneidungen werden durch das Zusammenpressen ausgeglichen, wobei bei gleichmäßigem Druck auf den Fixierschaft jedes Schaftteil seine ihm zugeordnete radiale Hinterschneidung soweit kompensiert, bis die Mantelfläche des Fixierschafts Zylinderform einnimmt.

Der Fixierschaft kann mit einer gleichmäßigen Schlitzdicke ausgebildet werden, was eine über die axiale Länge gesehen ungleichmäßige Dicke der Schaftteile zur Folge hat, damit eine Hinterschneidung am Fuß der Schaftteile gebildet wird. Es kann aber auch zweckmäßig sein, die Schaftteile gleichmäßig auszubilden und den Schlitz mit variierender Schlitzdicke zu versehen.

Gemäß einer vorteilhaften Ausführung ist zwischen dem in die Führungshülse einragenden Steckschaft des Verbindungsstifts und der Führurgshülse mindestens ein konusförmiger Verbindungsabschnitt mit flächigem Zusammenwirken der äußeren Mantelfläche des Steckschaftes und des Innenmantels der Führungshülse vorgesehen, wobei die axiale Länge des Verbindungsabschnitts maximal die Hälfte der Länge des Steckschafts beträgt. Der Verbindungsabschnitt dient der Führung des Verbindungsstiftes in der Hülse, in diesem Abschnitt sind die aufeinandertreffenden Flächen des Steckschafts und der Hülse komplementär geformt und liegen mit Haftreibung, aneinander. An den konischen Verbindungsabschnitt schließt sich ein weiterer Abschnitt an, wobei in diesem Abschnitt die radial einander zugewandten Flächen von Steckschaft und Hülse entweder nicht-komplementär geformt sind oder konzentrische, beabstandete Mantelflächen aufweisen, so daß in jedem Fall der Innenmantel in der Führungshülse und die äußere Mantelfläche am Steckschaft auf Abstand und daher reibungsfrei zueinander liegen. Hierdurch ist gewährleistet, daß die Reibungsfläche im wesentlichen nur auf den ersten, konisch geformten Abschnitt mit reduzierter Länge beschränkt werden kann. Die Reibungskräfte, insbesondere Haftreibungskräfte, sind so weit reduziert, daß zum Lösen der Steckverbindung nur geringe, das Arbeitsmodell nicht schädigende Reaktionskräfte aufzubringen sind. Die Reibungskräfte dürfen insbesondere diejenigen Haltekräfte nicht überschreiten, mit denen der Fixierschaft im Bohrloch des Arbeitsmodells gehalten ist. Zugleich sind die Haltekräfte der Verbindung aber groß genug, daß die Entstehung von Spiel ausgeschlossen ist. Die Verbindung ist in der Lage, die bei einer Modellbearbeitung üblicherweise auftretenden Kräfte bewegungsfrei aufzunehmen.

Es kann zweckmäßig sein, die axiale Länge des konischen Verbindungsabschnitts auf bis zu zwei Drittel der axialen Länge des Steckschafts auszudehnen.

Die beschränkte Länge des konischen Abschnitts ermöglicht es außerdem gemäß einer bevorzugten Weiterbildung, einen zweiten konischen Verbindungsabschnitt am Steckschaft vorzusehen, der axial beabstandet zum ersten konischen Verbindungsabschnitt angeordnet ist und dem ein wiederum komplementär geformter Abschnitt in der Führungshülse zugeordnet ist. Zwischen den beiden Verbindungsabschnitten ist ein mittlerer Abschnitt vorgesehen, der keine Verbindungsfunktion übernimmt. Im Bereich dieses mittleren Abschnitts, der zweckmäßig zylindrisch ausgebildet ist, sind der Steckschaft und die Führungshülse nicht-komplementär ausgebildet bzw. liegen auf Abstand zueinander, insbesondere ohne jeden Kontakt zwischen Mantelfläche des Steckschafts und Innenmantel der Führungshülse.

In bevorzugter Ausführung sind am Steckschaft drei Abschnitte in der Reihenfolge konischer Abschnitt - zylindrischer Abschnitt - konischer Abschnitt vorgesehen, wobei die konischen Abschnitte die Funktion von Verbindungsabschnitten übernehmen, denen komplementär geformte Abschnitte der Führungshülse zugeordnet sind, der zylindrische Abschnitt dagegen mit Abstand zum Innenmantel der Führungshülse angeordnet ist. In dieser Ausführung kann die gesamte axiale Länge des Steckschafts für die Verbindung zur Führungshülse genutzt werden, indem der erste konische Abschnitt im Anschluß an die Auflageschulter des Verbindungsstifts und der zweite konische Abschnitt im Bereich der freien Stirnseite des Steckschafts angeordnet wird, so daß der Stift an beiden axial gegenüberliegenden Enden des Steckschaftes eine Führung in der Hülse erfährt. Die lange Führung gewährleistet einen optimalen Sitz in der Hülse, die reduzierten Verbindungsflächen ein leichtes Lösen der Verbindung.

Zweckmäßig beträgt die axiale Länge aller konischen Abschnitte zusammengenommen maximal zwei Drittel, insbesondere maximal die Hälfte der Länge des Steckschafts.

Weitere Vorteile und zweckmäßige Ausführungsformen sind den weiteren Ansprüchen, der Figurenbeschreibung und den Zeichnungen zu entnehmen. Es zeigen:
- Fig. 1: eine Ansicht eines Fixierschafts eines Verbindungsstifts in entspannter Lage,
- Fig. 2: der Fixierschaft aus Fig. 1 mit zusammengepreßten Schaftteilen,
- Fig. 3 bis Fig. 9: ein Verbindungsstift mit in eine Führungshülse eingestecktem Steckschaft in verschiedenen AusFührungen,
- Fig. 10: ein Handgerät für eine erleichterte Handhabung eines Verbindungsstiftes.

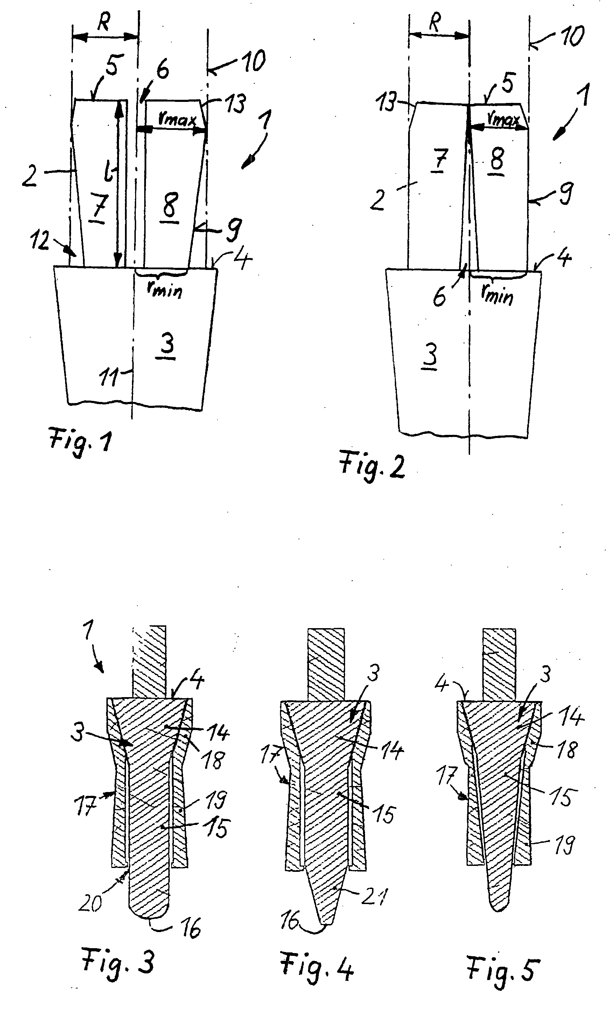

In Fig. 1 ist der obere Teil eines Verbindungsstifts 1 dargestellt, der für Steckverbindungen zur Befestigung von Zahnkranz- oder Kiefersegmenten aus Gips oder ähnlichem auf einer Modellbasis, welche üblicherweise ebenfalls aus Gips hergestellt wird, eingesetzt wird. Der Verbindungsstift 1 besteht aus zwei axial aneinandergrenzenden Schäften, einem Fixierschaft 2, der in ein vorgefertigtes Bohrloch eines Zahnkranzoder Kiefersegments eingesetzt und mit diesem verklebt wird, und einem Steckschaft 3, der in eine Führungshülse lösbar eingesteckt wird, welche in die Modellbasis eingegossen ist, und dessen oberer, konischer Abschnitt in Fig. 1 sichtbar dargestellt ist. Als Material für den Verbindungsstift wird üblicherweise Metall, für die Führungshülse Metall oder Kunststoff gewählt.

In einer alternativen Ausführung wird der Fixierschaft 2 ohne Klebung in das Bohrloch im Segment eingesetzt.

Der Fixierschaft 2 mit der axialen Länge l besteht aus zwei Schaftteilen 7, 8, zwischen denen ein Schlitz 6 gebildet ist. Im Fußbereich der Schaftteile 7, 8, dem Übergangsbereich zwischen dem Fixierschaft 2 und dem Steckschaft 3, ist eine Auflageschulter 4 gebildet, die gewährleistet, daß der Verbindungsstift mit einer definierten Länge in das Bohrloch im Zahn- oder Kiefermodell eingesetzt wird. Die Auflageschulter 4 entsteht dadurch, daß die beiden Schaftteile 7, 8 gegenüber dem maximalen Radius des Steckschaftes 3 im Übergang zwischen Steck- und Fixierschaft radial nach innen zurückversetzt sind.

In Fig. 1 ist der Fixierschaft 2 in unbelastetem Zustand frei von äußeren Kräften dargestellt. Der sich über die axiale Länge l erstreckende Schlitz 6 zwischen den beiden Schaftteilen 7, 8 weist eine konstante Schlitzdicke auf. Die Mantelfläche 9 der beiden Schaftteile 7, 8 ist näherungsweise konusförmig ausgebildet mit einem minimalen Radius rₘᵢₙ im Bereich der Auflageschulter 4 und einem maximalen Radius rₘₐₓ, der aufgrund einer Fase 13 knapp unterhalb der freien Stirnseite 5 des Fixierschaftes 2 erreicht wird, wobei die Radien rₘᵢₙ, rₘₐₓ in bezug auf die Längsachse 11 des Verbindungsstiftes gemessen werden. Gegenüber einer zylinderförmigen Einhüllenden 10, die durch die radial äußeren Punkte der Mantelfläche 9 der Schaftteile 7, 8 mit Radius rₘₐₓ geführt ist und die den mit rₘₐₓ identischen Radius R aufweist, bildet die Mantelfläche 9 im Bereich der Auflageschulter 4 eine radiale Hinterschneidung 12. Diese Hinterschneidung 12 kann als Differenz rₘₐₓ - rₘᵢₙ zwischen maximalem und minimalem Radius der Mantelfläche definiert werden und bezeichnet im Ausführungsbeispiel dasjenige Maß, mit dem der Befestigungsfuß der Schaftteile 7, 8 gegenüber den radial äußersten Punkten der Mantelfläche 9 radial nach innen zurückversetzt ist.

Die Mantelfläche 9 des unbelasteten Fixierschafts 2 weist im Ausführungsbeispiel näherungsweise Konusform auf; bei zugleich über die Länge l des Schafts 2 konstanter Schlitzdicke hat dies zur Folge, daß die Schaftteile 7, 8 eine in Richtung der freien Stirnseite 5 zunehmende radiale Dicke aufweisen.

Es kann gegebenenfalls aber auch zweckmäßig sein, die Schaftteile mit konstanter Dicke zu versehen, so daß sich bei koni scher Mantelfläche eine in Richtung freier Stirnseite des Fixierschafts zunehmende Schlitzdicke ergibt. Gemäß einer weiteren Ausführung weisen sowohl die Schaftteile als auch der Schlitz eine über die axiale Länge veränderliche Dicke auf.

In Fig. 2 ist der Fixierschaft 2 des Verbindungsstifts 1 mit radial nach innen zusammengedrückten Schaftteilen 7, 8 dargestellt, wobei die Schaftteile 7, 8 sich im Bereich der freien Stirnseite 5 berühren. Wird der Abstand der unbelasteten Schaftteile 7, 8 zweckmäßig so gewählt, daß die Schlitzdicke im Bereich der freien Stirnseite 5 etwa gleich groß wie die Summe der beiden Hinterschneidungen 12 auf radial gegenüberliegenden Seiten jedes Schaftteils 7, 8, so nimmt die Mantelfläche 9 der zusammengepreßten Schaftteile 7, 8 näherungsweise Zylinderform ein; der minimale Radius rₘᵢₙ, der maximale Radius rₘₐₓ und der Radius R der Einhüllenden 10 sind etwa gleich groß, so daß die Mantelfläche 9 im wesentlichen mit der zylindrischen Einhüllenden 10 zusammenfällt. Die zylindrisch zusammengepreßten Schaftteile 7, 8 können mit geringem Aufwand in ein zylindrisches Bohrloch eingeführt werden. Die Fase 13 verhindert beim Einführen ein Verkanten des Fixierschafts.

Im Ausführungsbeispiel sind die Schaftteile 7, 8 radial nach innen versetzt auf der Auflageschulter 4 angeordnet. Es kann aber auch zweckmäßig sein, die Schaftteile in der Weise anzuordnen, daß die Mantelfläche des Fixierschafts unmittelbar in die Mantelfläche des Steckschafts übergeht; in dieser Ausführung weist der Verbindungsstift keine Auflageschulter auf.

Es können sowohl zwei als auch mehr als zwei Schaftteile vorgesehen sein. Bei vier Schaftteilen bilden die beiden Schlitze zwischen den Schaftteilen vorzugsweise einen 90°-Winkel. Bevorzugt ist der Fixierschaft spiegelsymmetrisch zu einer Spiegelebene ausgebildet, die die Längsachse des Verbindungsstifts aufnimmt.

In den Fig. 3 bis 9 sind verschiedene Ausführungsformen von Steckverbindungen, bestehend aus jeweils einem Verbindungsstift in einer Führungshülse, gezeigt.

Gemäß Fig. 3 besteht der Steckschaft 3 des Verbindungsstifts 1 aus zwei Abschnitten, einem der Auflageschulter 4 unmittelbar benachbarten konusförmigen Verbindungsabschnitt 14 und einem sich daran anschließenden zylindrischen Abschnitt 15, dessen freien Stirnseite 16 teilkugelförmig abgerundet ist. Der Durchmesser des zylindrischen Abschnitts 15 ist gleich groß wie der minimale Durchmesser des Verbindungsabschnitts 14. Die Länge des Steckschafts 3 übersteigt die Länge der Führungshülse 17, die eine Durchtrittsöffnung im Boden aufweist, durch die der zylindrische Abschnitt 15 des Steckschaft 3 hindurchragt. Die Länge des konusförmigen Verbindungsabschnitts 14 ist etwa halb so lang wie die Länge des zylindrischen Abschnitts 15; insgesamt beträgt die Länge des Verbindungsabschnitts 14 etwa ein Drittel der axialen Länge des Steckschafts 3. Der Konuswinkel des Verbindungsabschnitts 14 ist größer als ein Grad. Über die Wahl des Konuswinkels können die Reibungskräfte beeinflußt werden, mit denen die Steckverbindung zusammengehalten wird, wobei ein kleinerer Konuswinkel größere Haftreibung und ein größerer Konuswinkel kleinere Haftreibung zur Folge hat. Wird die Führungshülse aus Metall gefertigt, beträgt der Konuswinkel zweckmäßig vier Grad, bei einer Kunststoffhülse sechs Grad.

Die Führungshülse 17 weist zwei Abschnitte 18, 19 auf, die den beiden Abschnitten 14, 15 des Steckschafts 3 zugeordnet sind. Der erste Abschnitt 18 der Führungshülse 17 weist einen Innenkonus auf, der komplementär zum konischen Verbindungsabschnitt 14 ausgebildet ist, so daß bei eingestecktem Verbindungsstift 1 die Mantelfläche des Verbindungsabschnitts 14 unmittelbar am Innenmantel des ersten Abschnitts 18 der Führungshülse 17 anliegt. Im Bereich der Auflageschulter 4 schließen der Verbindungsabschnitt 14 des Steckschafts 3 und der zugeordnete Abschnitt 18 der Führungshülse bündig ab.

Der zweite Abschnitt 19 der Führungshülse 17 ist wie der zugeordnete Abschnitt 15 des Steckschafts 3 zylindrisch geformt, er weist jedoch einen größeren Durchmesser auf als der Steckschaft, so daß die Mantelfläche des Steckschafts und der Innenmantel der Führungshülse in diesem Bereich auf Abstand zueinander liegen, ohne Berührung und ohne Reibung.

Der Durchmesser der Durchtrittsöffnung 20 im Boden des zweiten Abschnitts 19 der Führungshülse 17 weist einen geringfügig größeren Durchmesser auf als der zylindrische Abschnitt 15 des Steckschafts 3. Dadurch erfährt der Verbindungsabschnitt zwar keine Führung im Bereich der Durchtrittsöffnung, es wird aber verhindert, daß Gips in die Führungshülse 17 eindringt. Eine weitere Führung bzw. Stabilisierung kommt durch den axial aus der Führungshülse herausragenden Abschnitt des Steckschafts zustande, der in den Gips der Modellbasis eingesteckt wird.

Die in Fig. 4 dargestellte Steckverbindung weist einen gegenüber dem Ausführungsbeispiel nach Fig. 3 modifizierten Verbindungsstift auf. Der Steckschaft 3 besteht aus drei Abschnitten 14, 15 und 21, wobei die ersten beiden Abschnitte 14, 15 konusförmig und zylindrisch ausgeführt sind und der dritte, der freien Stirnseite 16 benachbarte Abschnitt 21 wiederum konusförmig ausgebildet ist. Die Konuswinkel der beiden konischen Abschnitte können gleich sein oder sich unterscheiden. Der zweite, zylindrische Abschnitt 15 liegt radial auf Abstand zum zugeordneten Abschnitt der Führungshülse. Der dritte, konusförmige Abschnitt 21 ragt vollständig aus der Führungshülse 17 heraus. Die axiale Länge der beiden konischen Abschnitte 14 und 21 zusammengenommen beträgt maximal zwei Drittel der axialen Länge des Steckschafts 3.

Im Ausführungsbeispiel nach Fig. 5 besteht der Steckschaft 3 des Verbindungsstifts aus insgesamt zwei Abschnitten 14, 15, die beide Konusform aufweisen. Der Konuswinkel des der Auflageschulter 4 benachbarten Verbindungsabschnitts 14 ist größer als der Konuswinkel des sich daran anschließenden zweiten Abschnitts 15. Die erste Abschnitt 18 der Führungshülse 17 ist komplementär zum Verbindungsabschnitt 14 geformt, wobei die Mantelfläche des Verbindungsabschnitts 14 am Innenmantel des Abschnitts 18 anliegt. Der Innenmantel des zweiten Abschnitts 19 der Führungshülse 17 weist einen konstanten Abstand zur Mantelfläche des zugeordneten zweiten Abschnitts 15 des Steckschafts 3 auf.

Den Ausführungsbeispielen nach den Fig. 3 bis 5 ist gemeinsam, daß der Verbindungsstift durch den der freien Stirnseite benachbarten Abschnitt, der aus der Führungshülse herausragt und unmittelbar in das Material der Modellbasis eingesteckt ist, eine weitere Abstützung erfährt.

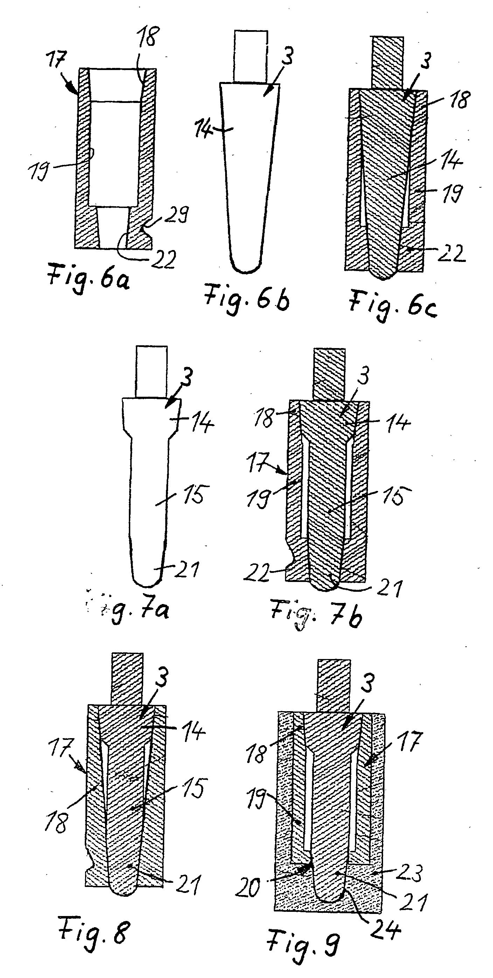

Die Fig. 6a bis 6c eine Führungshülse und einen Verbindungsstift in Einzelstellung und in Zusammenbaulage. Gemäß Fig. 6a besteht die Führungshülse 17 aus drei axial aufeinanderfolgenden Abschnitten 18, 19 und 22, wobei die axial außenliegenden Abschnitte 18 und 22 konisch geformt sind und den gleichen Konuswinkel aufweisen und der zwischenliegende Abschnitt 19 zylindrisch geformt ist. Wegen der Wahl gleicher Konuswinkel für die konischen Abschnitte 18, 22 ist die Herstellung erleichtert, weil der Konus in einem Arbeitsgang gefertigt werden kann. Auf der äußeren Mantelfläche der Führungshülse 17 ist eine Retention 29 vorgesehen, über die der Verbund zwischen Führungshülse und Modellbasis gestärkt wird.

Der Steckschaft 3 des in Fig. 6b dargestellten Stifts weist einen konischen Abschnitt 14 auf, dessen Konuswinkel auf denjenigen der konischen Abschnitte der Führungshülse abgestimmt ist.

Bei eingestecktem Verbindungsstift ist der obere und der untere Bereich des Abschnitts 14 des Steckschafts 3 gemäß Fig. 6c in den zugeordneten konischen Abschnitten 18 und 22 der Führungshülse aufgenommen. Der mittlere Abschnitt 19 der Führungshülse ist nicht-komplementär zum Abschnitt 14 des Steckschafts 3 geformt, so daß in diesem Abschnitt die äußere Mantelfläche des Abschnitts 14 und der Innenmantel des Abschnitts 19 auf Abstand zueinander liegen. In dieser Ausführung ist der Abschnitt 14 des Steckschafts 3 mit einheitlicher Mantelfläche in drei Unterabschnitte unterteilt, von denen die zwei außenliegenden die Verbindung zur Führungshülse herctellen.

Die Fig. 7a, 7b zeigen ein weiteres Ausführungsbeispiel. Der Steckschaft 3 des Verbindungsstifts besteht aus zwei axial außenliegenden konischen Abschnitten 14 und 21 und einem zwischenliegenden zylindrischen Abschnitt 15. Die zugehörige Führungshülse besteht wie die in Fig. 6a, 6c gezeigte Führungshülse aus zwei konischen Abschnitten 18, 22 und einem zwischenliegenden zylindrischen Abschnitt 19, dessen Durchmesser jedoch großer ist als der zugeordnete zylindrische Abschnitt 15 des Steckschafts 3.

In Fig. 8 ist noch ein Ausführungsbeispiel gezeigt, wobei der Steckschaft 3 des Verbindungsstifts identisch ist mit dem in Fig. 7a, b gezeigten Steckschaft und zwei konische Abschnitte 14, 21 und einen mittleren zylindrischen Abschnitt 15 aufweist. Die Führungshülse 17 ist mit einem über ihre axiale Länge durchgehenden, als Innenkonus geformten Abschnitt 18 versehen, dessen Konuswinkel demjenigen der beiden Konus-Abschnitte 14, 21 des Verbindungsstifts entspricht.

Gemäß Fig. 9 ist der Steckschaft 3 gleich aufgebaut wie im Ausführungsbeispiel nach Fig. 8. Die Führungshülse 17 weist einen oberen konischen Abschnitt 18 und einen unteren zylindrischen Abschnitt 19 auf. Zusätzlich ist eine Modellbasis 23 dargestellt, in die die Führungshülse 17 eingesetzt ist. Die Modellbasis 23 weist eine Ausnehmung 24 unmittelbar benachbart zur Durchtrittsöffnung 20 im Boden der Führungshülse 17 auf; die Ausnehmung 24 nimmt den Abschnitt 21 des Steckschafts 3 auf.

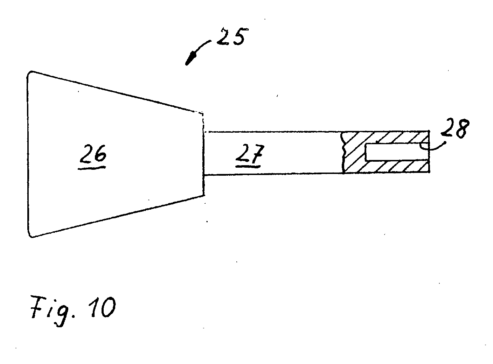

Fig. 10 zeigt ein Handgerät 25 zum erleichterten Aufnahmen und Absetzen eines Verbindungsstiftes. Das Handgerät besteht aus einem Griff 26, an dem ein Aufnahmestift 27 befestigt ist, an dessen freier Stirnseite eine Aufnahmebohrung 28 eingebracht ist. Zur erleichterten Handhabung eines Verbindungsstiftes kann dieser in die Aufnahmebohrung aufgenommen und in das Bohrloch des Modells eingesetzt werden.

## Patentansprüche

1. Verbindungsstift (1) für eine Steckverbindung zur Befestigung von Zahnkranz- oder Kiefersegmenten auf einer Modellbasis (23), mit einem Fixierschaft (2) und einem Steckschaft (3), der lösbar in einen Sitz in einer Führungshülse (17) einsteckbar ist, welche in der Modellbasis (23) aufgenommen ist, wobei der Fixierschaft (2) einen in Längsrichtung des Verbindungsstifts (1) verlaufenden und sich über die axiale Länge (l) des Fixierschafts (2) erstreckenden Schlitz (6) aufweist, der den Fixierschaft (2) in zumindest zwei beabstandete, biegsame Schaftteile (7, 8) unterteilt, und wobei die radial außenliegende Mantelfläche (9) des von äußeren Kräften unbelasteten Fixierschaftes (2) über die Länge (l) des Fixierschafts (2) gesehen einen veränderlichen Radius (rₘᵢₙ, rₘₐₓ) aufweist,
**dadurch gekennzeichnet,**
- **daß** die Mantelfläche (9) des von außeren Kräften unbelasteten Fixierschafts (2) näherungsweise konisch verläuft, wobei die Mantelfläche (9) im unbelasteten Zustand gegenüber einer zylindrischen Einhüllenden (10), deren Radius (R) dem maximalen radialen Abstand (rₘₐₓ) der Mantelfläche (9) von der Längsachse (11) entspricht, zumindest im Bereich des kleinsten Radius (rₘᵢₙ) der Mantelfläche (9) benachbart dem Steckschaft (3) eine radiale Hinterschneidung bildet,
- **daß** die Mantelfläche (9) des Fixierschafts (2) durch Zusammenpressen auf Zylinderform reduzierbar ist.

2. Verbindungsstift nach Anspruch 1,
**dadurch gekennzeichnet,**
**daß** im Übergangsbereich zwischen Fixierschaft (2) und Steckschaft (3) eine Auflageschulter (4) gebildet ist, wobei sich der Schlitz (6) zwischen der freien Stirnseite des Fixierschafts (5) und der Auflageschulter (4) erstreckt.

3. Verbindungsstift nach Anspruch 1 oder 2,
**dadurch gekennzeichnet,**
**daß** die Schlitzdicke im Bereich der freien Stirnseite (5) des Fixierschafts (2) größer oder gleich der Summe radial gegenüberliegender Hinterschneidungen im Bereich des kleinsten Radius (rₘᵢₙ) der Mantelfläche (9) ist.

4. Verbindungsstift nach einem der Ansprüche 1 bis 3,
**dadurch gekennzeichnet,**
**daß** der Schlitz (6) über die Länge (l) des Fixierschafts (2) eine gleichmäßige Schlitzdicke aufweist.

5. Verbindungsstift nach einem der Ansprüche 1 bis 3,
**dadurch gekennzeichnet,**
**daß** die Schaftteile (7, 8) über die Länge (l) des Fixierschafts (2) eine näherungsweise gleichmäßige Dicke aufweisen.

6. Verbindungsstift nach einem der Ansprüche 1 bis 5,
**dadurch gekennzeichnet,**
**daß** der Fixierschaft (2) insgesamt zwei Schlitze aufweist, die in einem 90°-Winkel zueinander angeordnet sind.

7. Verbindungsstift nach einem der Ansprüche 1 bis 6,
**dadurch gekennzeichnet,**
**daß** der Fixierschaft (2) im Bereich seiner freien Stirnseite (5) angefast ist.

8. Verbindungsstift nach einem der Ansprüche 1 bis 7,
**dadurch gekennzeichnet,**
**daß** der Fixierschaft (2) spiegelsymmetrisch aufgebaut ist.

9. Verbindungsstift nach einem der Ansprüche 1 bis 8,
**dadurch gekennzeichnet,**
**daß** ein Handgerät (25) zum erleichterten Aufnahmen und Absetzen des Verbindungsstiftes vorgesehen ist, wobei das Handgerät (25) einen Griff (26) und einen Aufnahmestift (27) umfaßt, an dessen freier Stirnseite eine Aufnahmebohrung (28) zur Aufnahme des Verbindungsstiftes angeordnet ist.

## Claims

1. Connecting pin (1) for a socket connection for fastening dental crown or jaw segments to a model base (23), with a fixing shank (2) and a socket shank (3), which socket shank (3) can be inserted releasably into a seat in a guiding sleeve (17) which is accommodated in the model base (23), the fixing shank (2) having a slot (6) running in the longitudinal direction of the connecting pin (1) and extending over the axial length (l) of the fixing shank (2), which slot (6) divides the fixing shank (2) into at least two spaced-apart, flexible shank parts (7, 8), and the radially outer surface area (9) of the fixing shank (2), not loaded by external forces, having a variable radius (rₘᵢₙ, rₘₐₓ) as viewed along the length (l) of the fixing shank (2),
**characterized in that**
- the surface area (9) of the fixing shank (2), not loaded by external forces, runs approximately conically, and the surface area (9), in the unloaded state, in relation to a cylindrical envelope (10) whose radius (R) corresponds to the maximum radial distance (rₘₐₓ) of the surface area (9) from the longitudinal axis (11), forms a radial undercut at least in the area of the smallest radius (rₘᵢₙ) of the surface area (9) adjacent to the socket shank (3),
- the surface area (9) of the fixing shank (2) can be reduced by compression to cylinder shape.

2. Connecting pin according to Claim 1, **characterized in that** a support shoulder (4) is formed in the transition area between fixing shank (2) and socket shank (3), and the slot (6) extends between the free end face of the fixing shank (5) [sic] and the support shoulder (4).

3. Connecting pin according to Claim 1 or 2, **characterized in that** the slot thickness in the area of the free end face (5) of the fixing shank (2) is greater than or equal to the sum of radially opposite undercuts in the area of the smallest radius (rₘᵢₙ) of the surface area (9).

4. Connecting pin according to one of Claims 1 to 3, **characterized in that** the slot (6) has a uniform slot thickness over the length (l) of the fixing shank (2).

5. Connecting pin according to one of Claims 1 to 3, **characterized in that** the shank parts (7, 8) have an approximately uniform thickness over the length (l) of the fixing shank (2).

6. Connecting pin according to one of Claims 1 to 5, **characterized in that** the fixing shank (2) has a total of two slots which are arranged at a 90° angle to each other.

7. Connecting pin according to one of Claims 1 to 6, **characterized in that** the fixing shank (2) is chamfered in the area of its free end face (5).

8. Connecting pin according to one of Claims 1 to 7, **characterized in that** the fixing shank (2) is made mirror-symmetrical.

9. Connecting pin according to one of Claims 1 to 8, **characterized in that** a hand tool (25) is provided making it easier to pick up and set down the connecting pin, the hand tool (25) having a grip part (26) and a rod (27), at the free end face of which there is introduced a receiving bore (28) for receiving the connecting pin.

## Revendications

1. Broche de liaison (1) pour une liaison enfichable, pour la fixation de segments de couronne dentaire ou de mâchoire sur une embase de modèle (23), avec une tige de fixation (2) et une tige à enficher (3) qui peut s'enficher de manière amovible dans un logement aménagé dans une douille de guidage (17) elle-même logée dans l'embase de modèle (23), la tige de fixation (2) présentant une fente (6) orientée dans la direction longitudinale de la broche de liaison (1) et s'étendant sur la longueur axiale (l) de la tige de fixation (2) et divisant la tige de fixation (2) en au moins deux parties de tige (7, 8) flexibles et placées à distance l'une de l'autre, et la surface d'enveloppe (9) radiale extérieure de la tige de fixation (2) non soumise à des forces extérieures présentant sur la longueur (l) de la tige de fixation (2) un rayon variable (rₘᵢₙ, rₘₐₓ),
**caractérisée en ce que**
- la surface d'enveloppe (9) de la tige de fixation (2) non soumise à des forces extérieures a une forme sensiblement conique, la surface d'enveloppe (9) non soumise à effort constituant, au moins dans la zone du rayon le plus petit (rₘᵢₙ) de la surface d'enveloppe (9), à proximité de la tige à enficher (3), une contre-dépouille radiale par rapport à une enveloppante de forme cylindrique (10) dont le rayon (R) correspond à la distance radiale maximale (rₘₐₓ) de la surface d'enveloppe (9) à l'axe longitudinal (11),
- la surface d'enveloppe (9) de la tige de fixation (2) peut être réduite par compression à une forme cylindrique.

2. Broche de liaison selon la revendication 1,
**caractérisée en ce que**
un épaulement d'appui (4) est formé dans la zone de transition entre la tige de fixation (2) et la tige à enficher (3), la fente (6) s'étendant entre la face d'extrémité libre (5) de la tige de fixation et l'épaulement d'appui (4).

3. Broche de liaison selon la revendication 1 ou 2,
**caractérisée en ce que**
l'épaisseur de la fente dans la zone de la face d'extrémité libre (5) de la tige de fixation (2) est supérieure ou égale à la somme des contre-dépouilles radialement opposées dans la zone du plus petit rayon (rₘᵢₙ) de la surface d'enveloppe (9).

4. Broche de liaison selon l'une des revendications 1 à 3,
**caractérisée en ce que**
la fente (6) présente une épaisseur de fente égale sur la longueur (l) de la tige de fixation (2).

5. Broche de liaison selon l'une des revendications 1 à 3,
**caractérisée en ce que**
les parties de tige (7, 8) présentent une épaisseur sensiblement égale sur la longueur (l) de la tige de fixation (2).

6. Broche de liaison selon l'une des revendications 1 à 5,
**caractérisée en ce que**
la tige de fixation (2) présente en tout deux fentes disposées à un angle de 90° l'une par rapport à l'autre.

7. Broche de liaison selon l'une des revendications 1 à 6,
**caractérisée en ce que**
la tige de fixation (2) est chanfreinée dans la zone de sa face d'extrémité libre (5).

8. Broche de liaison selon l'une des revendications 1 à 7,
**caractérisée en ce que**
la tige de fixation (2) présente une structure symétrique en image miroir.

9. Broche de liaison selon l'une des revendications 1 à 8,
**caractérisée en ce que**
un outil à main (25) est prévu pour faciliter la mise en place et l'enlèvement de la broche de liaison, l'outil à main (25) se composant d'une poignée (26) et d'une tige de logement (27), dans la face d'extrémité libre de laquelle est aménagé un logement (28) recevant la broche de liaison.
